Europäisches Patentamt

European Patent Office

Office européen des brevets

(11) Numéro de publication : **0 453 338 A1**

(12) **DEMANDE DE BREVET EUROPEEN**

(21) Numéro de dépôt : **91400755.4**

(22) Date de dépôt : **20.03.91**

(51) Int. Cl.⁵ : **F16K 1/22**, F02M 19/01,
B23P 19/04

(30) Priorité : 23.03.90 FR 9003757

(43) Date de publication de la demande :
23.10.91 Bulletin 91/43

(84) Etats contractants désignés :
DE ES GB IT

(72) Inventeur : Bongart, Marcel
8, Bois de l'Epinguet
F-27930 Aviron (FR)
Inventeur : Lecoeur, Gérard
4, rue des Géraniums
F-27000 Evreux (FR)

(74) Mandataire : Fort, Jacques
CABINET PLASSERAUD 84, rue d'Amsterdam
F-75009 Paris (FR)

(71) Demandeur : SOLEX
19, rue Lavoisier
F-92002 Nanterre Cédex (FR)

(54) **Procédé et dispositif de montage d'équipage rotatif d'étranglement sur un conduit.**

(57) Le procédé et le dispositif sont utilisables pour monter un ensemble axe-papillon dans un conduit constitué par un corps de papillon. Le dispositif comprend un bâti (26) de réception du conduit muni dudit équipage. Il comporte également des premiers moyens (28, 30, 32) de déplacement dudit axe, dans un premier sens, jusqu'à la première position de butée, des seconds moyens (36, 38, 40) de déplacement dudit axe, dans le sens opposé, jusqu'à la seconde position de butée, des moyens (34) de repérage desdites positions de butée, et des moyens de calcul de l'intervalle (j) entre les positions de butée et de commande des premiers ou seconds moyens pour déplacer l'axe, depuis la première ou seconde position de butée, d'une distance égale à une fraction prédéterminée dudit intervalle.

EP 0 453 338 A1

Jouve, 18, rue Saint-Denis, 75001 PARIS

FIG.1.

# PROCEDE ET DISPOSITIF DE MONTAGE D'EQUIPAGE ROTATIF D'ETRANGLEMENT SUR UN CONDUIT

L'invention concerne le montage d'un équipage rotatif d'étranglement du passage défini par un conduit, ledit équipage comprenant un axe qui traverse le conduit et un papillon de forme correspondant à celle du conduit, insérable dans une fente radiale de l'axe et solidarisable de ce dernier, par exemple par serrage de la fente.

L'invention trouve une application particulièrement importante, bien que non exclusive, dans le montage de l'équipage rotatif d'étranglement du débit d'air dans un système d'alimentation d'un moteur à combustion interne, notamment dans le corps de papillon de réglage de débit d'air des systèmes d'alimentation à injection et dans les carburateurs.

On connaît déjà des procédés de montage suivant lesquels on insère l'axe dans le conduit, on le munit des éléments qui fixent son débattement axial, on introduit le papillon dans la fente et on amène l'axe dans l'orientation où le papillon obture le passage du conduit avant de fixer le papillon à l'axe. Un procédé permettant d'effectuer automatiquement ces opérations est décrit dans la demande de brevet FR n° 89 01186.

La fente a une longueur axiale légèrement supérieure à la largeur du papillon, de sorte que l'axe peut être ajusté axialement, par rapport au papillon. Lorsque ce dernier est dans sa position d'obturation, il est fixe par rapport au conduit. L'axe peut alors être déplacé entre une première et une seconde positions de butée fixées par la venue en appui des éléments qui l'équipent. Pour réduire les frottements, aucun de ces éléments ne doit s'appuyer sur le conduit en fonctionnement. Pour atteindre ce résultat, alors que le débattement autorisé entre les deux venues en butée n'est généralement que de quelques dixièmes de millimètre, on essaie d'équilibrer les jeux qui subsistent entre le conduit et les éléments venant en appui avant de solidariser le papillon de l'axe. A l'heure actuelle, cette opération s'effectue en appréciant visuellement les jeux. Cette méthode est délicate et ne permet pas d'atteindre le degré de fiabilité et de précision souhaitable.

L'invention vise à fournir un procédé et un dispositif de montage d'équipage rotatif répondant mieux que ceux antérieurement connus aux exigences de la pratique, notamment en ce qu'ils permettent un équilibrage précis et fiable des jeux, et cela de façon automatique, en ne mettant en oeuvre que des moyens relativement simples.

Dans ce but, l'invention propose notamment un procédé de montage du type ci-dessus défini, caractérisé en ce que :

– on amène l'axe dans ses deux positions de butée pour repérer ces positions,

– on en déduit le jeu axial,

– on déplace automatiquement l'axe, à partir d'une de ses positions de butée, d'une distance sensiblement égale à la moitié dudit jeu axial, et

– on immobilise le papillon sur l'axe.

L'invention propose également un dispositif permettant de mettre en oeuvre le procédé ci-dessus et comprenant un bâti de réception du conduit muni dudit équipage, caractérisé en ce qu'il comporte également :

– des premiers moyens de déplacement dudit axe dans un premier sens, jusqu'à la première position de butée,

– des seconds moyens de déplacement dudit axe, dans le sens opposé, jusqu'à la seconde position de butée,

– des moyens de repérage desdites positions de butée,

– des moyens de calcul de l'intervalle entre les positions de butée et de commande des premiers ou seconds moyens pour déplacer l'axe, depuis la première ou seconde position de butée, d'une distance égale à une fraction prédéterminée dudit intervalle.

L'invention sera mieux comprise à la lecture de la description qui suit d'un mode particulier de réalisation, donné à titre d'exemple non limitatif. La description se réfère aux dessins qui l'accompagnent, dans lesquels :

– la Figure 1 montre un dispositif de mise en oeuvre de l'invention, dans l'état où il se trouve lorsque l'axe a été amené dans une première position de butée,

– la Figure 2, similaire à la Figure 1, montre l'axe amené dans sa seconde position de butée,

– la Figure 3 montre le dispositif dans la position où il est lorsqu'il a amené l'axe dans la position où les jeux sont équilibrés.

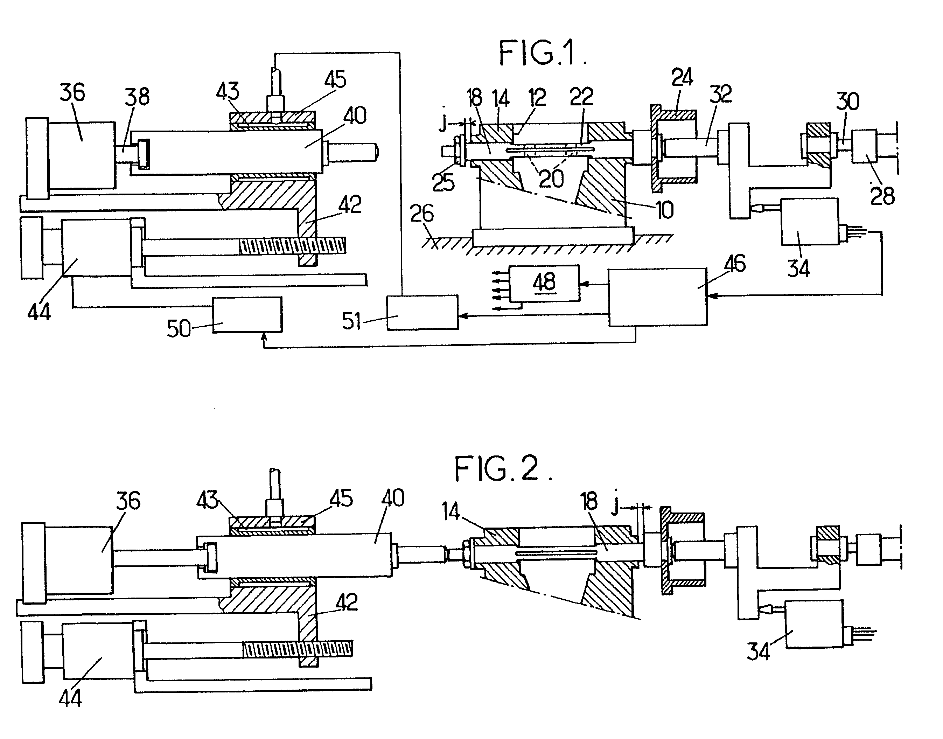

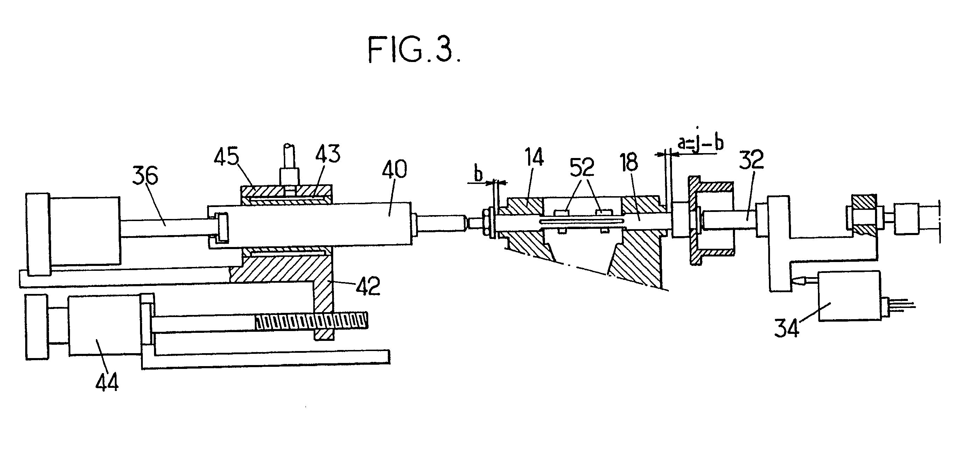

Le dispositif montré en Figures 1 à 3 est utilisable pour le montage d'un équipage rotatif de corps de papillon pour système d'injection de combustible. Ce corps de papillon comporte une pièce de fonderie, constituant un conduit 10 dans lequel est ménagé un passage 12. Dans la paroi du conduit sont ménagées deux portées alignées 14 dans lesquelles tourne un axe 18, par l'intermédiaire de paliers non représentés. L'axe appartient à l'équipage rotatif comprenant également un papillon d'étranglement 22. Ce papillon est inséré dans une fente radiale de l'axe, suffisamment longue pour laisser au papillon une possibilité de débattement dans le sens axial. A travers l'axe sont percés des trous 20 destinés à recevoir des vis de serrage de l'axe sur le papillon, dans lequel est ménagé un trou allongé de passage des vis. Le papillon a une dimension telle que, lorsqu'il est amené dans la position montrée en Figure 1, il obture le conduit 12.

Le procédé de montage selon l'invention comporte des étapes préliminaires, en elles-mêmes connues, consistant à insérer l'axe 18 à travers le conduit, à le munir des éléments qui limitent son débattement dans le sens axial, à glisser le papillon 22 dans la fente, puis à faire tourner l'axe jusqu'à la position où le papillon ferme le passage 12. Ces opérations peuvent être effectuées manuellement ou par le procédé décrit dans la demande de brevet FR n° 89 01186 déjà mentionnée. Dans le cas illustré sur la Figure 1, les éléments qui limitent le débattement axial de l'axe comprennent une pièce 24 de commande de l'axe en rotation, et un écrou de serrage 25 fixé sur une partie terminale filetée, de l'autre côté de l'axe.

L'ensemble ainsi constitué est placé sur le bâti 26 du dispositif destiné à ajuster la position axiale de l'axe, avant blocage du papillon. Le bâti 26 peut comporter un alvéole de réception du conduit, donnant à celui-ci une position et une orientation bien déterminées.

Les composants du dispositif portés par le bâti 26 comprennent des premiers moyens destinés à repousser l'axe dans une première direction (vers la gauche sur la Figure 1) jusqu'à ce qu'il arrive dans une première position de butée axiale. Dans le cas illustré, ces moyens comprennent un vérin hydraulique, pneumatique ou électrique 28 dont le plongeur mobile 30 a une course parallèle à l'axe de rotation de l'axe 18 et est muni d'un poussoir 32 d'appui sur l'extrémité droite de l'axe. Ce poussoir coopère également avec le palpeur d'un capteur de déplacement 34 qui constitue un moyen de repérage des positions de butée. Le capteur est prévu pour que son palpeur reste en contact avec le poussoir.

Des seconds moyens de déplacement de l'axe 18 comprennent un contre-vérin 36 aligné avec le vérin 28 et dont le plongeur 38 est couplé à un second poussoir 40 destiné à s'appuyer contre l'extrémité de gauche de l'axe 18. Ce contre-vérin 36 est prévu pour exercer une force supérieure à celle du vérin 28. Le corps du contre-vérin 36 n'est pas fixé directement au bâti 26. Il est porté par un chariot 42 déplaçable, à l'aide d'un moteur électrique 44 dont le déplacement parallèlement à l'axe peut être commandé avec précision (moteur pas-à-pas ou moteur asservi par exemple). Le moteur 44 peut notamment entraîner le chariot par l'intermédiaire d'une liaison vis-écrou. Des glissières, non représentées, peuvent être prévues pour guider le chariot sur le bâti.

Le poussoir 40 est déplaçable longitudinalement dans une gaine 45 appartenant au chariot. Un frein 43, constitué par exemple par un manchon, par exemple pneumatique équipant la gaine permet, suivant qu'il est alimenté ou non en fluide sous pression, d'immobiliser le poussoir 40 par rapport au chariot ou de libérer le poussoir.

Le dispositif comprend encore des moyens de calcul et de commande 46, dont les fonctions seront détaillées plus loin, qui reçoivent les signaux de mesure fournis par le capteur 34 et commandent une batterie d'électrovannes 48 d'alimentation des vérins à double effet 28 et 36 (lorsque ces vérins sont à pression de fluide), une alimentation électrique 50 de commande du moteur 44 et des moyens 51 d'alimentation du frein 43.

Le procédé d'équilibrage des jeux axiaux de l'axe 18 est alors le suivant, lors de la mise en oeuvre du dispositif qui vient d'être décrit. Les opérations successives nécessaires sont commandées par le circuit 46, suivant un programme mémorisé.

Le conduit 10 déjà équipé de l'axe 18 et du papillon 22 orienté dans la position de fermeture, est placé sur le bâti 26 alors que les poussoirs 32 et 40 sont en position rétractée. Le vérin 28 est actionné jusqu'à ce que le poussoir 32 vienne amener l'axe 18 dans la position de butée où il est représenté sur la Figure 1 : un jeu j existe alors du côté gauche de l'axe. Lorsque le déplacement du palpeur cesse, le signal de sortie fourni par le capteur 34, qui peut être de type analogique ou numérique, est mémorisé par le circuit 46.

Le contre-vérin 36 est alors actionné par le circuit 46, le frein 43 étant hors d'action et le vérin 28 restant actionné. Le poussoir 40 amène alors l'axe 18 en butée du côté gauche du conduit 10 (Figure 2). Lorsque le déplacement du poussoir 40 cesse, le circuit 46 mémorise le signal de position fourni par le capteur 34.

Le circuit de calcul et de commande 46 peut alors, par simple différence, calculer le jeu j. Il ne reste plus qu'à déplacer l'axe 18 vers la gauche d'une fraction prédéterminée du jeu latéral j : cette fraction sera en général de 1/2.

Pour cela, lors de la mise en oeuvre du dispositif illustré, il suffit de laisser les vérins 28 et 36 alimentés, d'actionner le frein 43 et de déplacer le chariot 42 vers la gauche, à l'aide du moteur 44, de la distance correspondant au jeu b que l'on veut créer à gauche : l'axe suit le poussoir 40, étant soumis à l'action du poussoir 32, le jeu a résiduel à droite étant alors égal à j-b.

Le dispositif étant dans cet état, on immobilise le papillon 22 sur l'axe 18, par exemple à l'aide de vis 52 traversant les trous 20 qui sont lisses d'un côté du papillon, taraudés de l'autre côté.

Une fois cette opération terminée, le frein 43 peut être desserré et les vérins 28 et 36, ainsi que le moteur 44, peuvent être ramenés dans leur position d'origine.

L'invention est susceptible de nombreuses variantes. Deux capteurs au lieu d'un seul capteur 34 peuvent être prévus. Les moyens de déplacement 28 et 36 peuvent être combinés en un seul ensemble, placé d'un seul côté de l'axe, en munissant le poussoir unique de moyens permettant de l'accoupler temporairement de façon bidirectionnelle avec l'axe 18. Les moyens permettant de déplacer l'axe 18 de la distance b peuvent être intégrés au contre-vérin 36.

Il va sans dire que la portée du présent brevet s'étend à de telles variantes, ainsi plus généralement qu'à toutes autres restant dans le cadre des équivalences.

**Revendications**

1. Procédé de montage d'un équipage rotatif d'étranglement du passage ménagé dans un conduit, ledit équipage comprenant un axe (18) qui traverse le conduit et un papillon (22) de forme correspondant à celle du conduit, insérable dans une fente axiale de l'axe et solidarisable de ce dernier, suivant lequel on insère l'axe dans le conduit, on le munit des éléments qui fixent son débattement axial, on introduit le papillon dans la fente et on amène l'axe dans l'orientation où le papillon obture le passage du conduit avant de fixer le papillon à l'axe,

   caractérisé en ce que, avant fixation du papillon :
   − on amène l'axe (18) successivement dans ses deux positions de butée et on repère ces positions,
   − on en déduit le jeu axial (j),
   − on déplace automatiquement l'axe (18), à partir d'une de ses positions de butée, d'une distance égale à une fraction prédéterminée dudit jeu axial, et
   − on immobilise le papillon (22) sur l'axe (18).

2. Dispositif permettant de mettre en oeuvre le procédé selon la revendication 1, comprenant un bâti (26) de réception du conduit muni dudit équipage,

   caractérisé en ce qu'il comporte également :
   − des premiers moyens (28, 30, 32) de déplacement dudit axe, dans un premier sens, jusqu'à la première position de butée,
   − des seconds moyens (36, 38, 40) de déplacement dudit axe, dans le sens opposé, jusqu'à la seconde position de butée,
   − des moyens (34) de repérage desdites positions de butée, et
   − des moyens (46) de calcul de l'intervalle (j) entre les positions de butée et de commande des premiers ou seconds moyens pour déplacer l'axe (18), depuis la première ou seconde position de butée, d'une distance (b), égale à une fraction prédéterminée dudit intervalle.

3. Dispositif selon la revendication 2, caractérisé en ce que lesdits premiers moyens comprennent un vérin (28) hydraulique, pneumatique ou électrique muni d'un poussoir (32) d'appui contre l'une des extrémités de l'axe et en ce que les seconds moyens comprennent un contre-vérin (36) capable d'exercer un effort supérieur à celui du premier sur l'autre extrémité de l'axe.

4. Dispositif selon la revendication 3, caractérisé en ce que le capteur (34) est monté de façon à repérer la position du poussoir (32).

5. Dispositif selon la revendication 3 ou 4, caractérisé en ce que les seconds moyens comprennent de plus un chariot (42) solidarisable de l'élément mobile du contre-vérin (36) et permettant de déplacer ledit élément mobile dans la direction axiale d'une distance ajustable.

6. Dispositif selon la revendication 5, caractérisé en ce que le chariot est muni d'un moteur électrique (44) de déplacement commandé du chariot (42) par rapport au bâti (26).

7. Dispositif selon la revendication 5 ou 6, caractérisé en ce que le chariot (42) porte le corps du contre-vérin (36) et un frein (43) permettant d'immobiliser l'élément mobile du contre-vérin (36) sur le chariot.

8. Dispositif selon l'une quelconque des revendications 3 à 7, caractérisé en ce que les moyens de calcul et de commande comprennent de plus des moyens d'alimentation des vérins (28, 36) et éventuellement du moteur de commande du chariot (42) suivant une séquence de fonctionnement prédéterminée.

FIG.1.

FIG.2.

# FIG.3.

EP 0 453 338 A1

Office européen
des brevets

**RAPPORT DE RECHERCHE EUROPEENNE**

Numero de la demande

EP 91 40 0755

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN, vol. 4, no. 41 (M-5)[523], 29 mars 1980; & JP-A-55 11 755 (MITSUBISHI JUKOGYO K.K.) 26-01-1980 | | F 16 K 1/22<br>F 02 M 19/01<br>B 23 P 19/04 |

**DOMAINES TECHNIQUES RECHERCHES (Int. Cl.5)**

F 16 K 1/00
F 16 K 27/00
F 02 M 19/00
B 23 P 19/00

Le présent rapport a été établi pour toutes les revendications

| Lieu de la recherche | Date d'achèvement de la recherche | Examinateur |
|---|---|---|
| LA HAYE | 05-08-1991 | DE SMET F.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)

8